# EUROPEAN PATENT SPECIFICATION

(11) **EP 1 826 039 B1**
(45) Date of publication and mention of the grant of the patent: **31.03.2010**
(21) Application number: 06124296.2
(22) Date of filing: 17.11.2006
(51) Int. Cl.: B60H 1/00

(54) **Variable flow valve**
Ventil mit veränderbarem Durchfluss
Soupape à débit variable

(30) Priority: 28.02.2006 GB 0603903
(43) Date of publication of application: 29.08.2007
(73) Proprietor: Delphi Technologies, Inc., Troy, MI 48007 (US)
(72) Inventor: Nystrom, Mikael, 1725 Luxembourg (LU)
(74) Representative: Robert, Vincent

(56) References cited:
- EP-A- 1 070 611
- DE-A1- 10 356 698
- FR-A- 2 851 502
- US-A- 4 383 642
- US-A- 4 452 301
- US-A1- 2001 008 148
- US-A1- 2001 027 861

## Description

The present invention relates to a variable flow valve, particularly, but not exclusively, to a variable flow valve used to control mixture of air within the Heating Ventilation and Air Conditioning (HVAC) module of an automobile.

HVAC modules in automobiles typically have an inlet for allowing air into the module (often from a blower), outlets for controlling exit of air from the HVAC into the automobile interior, an evaporator for cooling the air passing through the module and a heater core for warming air passing through the module. In order to provide desirable temperature conditions within the vehicle interior, means for selecting and mixing warm air from the heater core with cool air from the evaporator are required.

The mixing operation is currently achieved using a mixing door. One such mixing door is described in European Patent Publication Number 1070611A1. In such systems the door slides along a rail in order to simultaneously open or close the passage which allows air to pass over the heater core and the passage which allows air to pass over the evaporator. However, this can cause excessive noise and only provides limited control of the relative quantities of air flow passing over the evaporator and the heater core.

According to the present invention, there is provided variable flow valve for a Heating Ventilation and Air Conditioning module, the variable flow valve comprising:-
a mixing door;
a baffle linked to the mixing door by way of linking means such that movement of the mixing door causes the baffle to move from a closed configuration to an open configuration; and
a control means for controlling the baffle such that movement of the baffle from a closed configuration to the open configuration causes the baffle to tilt relative to flow through the valve wherein the control means comprises a first cammed control slot for receiving a portion of the baffle and a second cammed control slot corresponding to, and on an opposite side from, the first cammed control slot, the first and second cammed control slots having different radii of curvature from one another in order to cause the baffle to twist around a twist axis substantially perpendicular to flow through the valve.

Preferably, the movement of the mixing door comprises rotational movement.

Optionally, the linking means comprises a link member having a first hinge at one end to allow connection to the mixing door and a second hinge at the other end to allow connection to the baffle. Preferably, the link member is an H-link

Preferably, the mixing door comprises a first section adapted to selectively prevent flow to bypass a heater core and a second section angled relative to the first to selectively prevent flow to bypass an evaporator.

Preferably, an actuator, typically in the form of an electrical motor or a bowden cable, is provided on the mixing door.

Typically, the variable flow valve is housed within a Heating Ventilation and Air Conditioning module having an evaporator, heater core, flow inlets and flow outlets.

Embodiments of the apparatus according to the present invention will now be described, with reference to the accompanying drawings, in which:-
Fig. 1 is a transverse schematic representation of the present invention in a maximum cooling configuration;
Fig. 2 is a transverse schematic representation of the present invention in a partial cooling configuration; and
Fig. 3 is a transverse schematic representation of the present invention in a maximum heating configuration.

Variable flow valve 10 is shown installed in an HVAC module comprising a housing 12 having a defrost outlet 14, ventilation outlet 16 and flooring outlet 17 formed thereon. Mounted in the housing 12 is an evaporator 18 and a heater core 20. In use, air flow passes into the HVAC module through the evaporator 18 through the variable flow valve 10 and out into the vehicle interior through outlets 14, 16 and 17.

The variable flow valve comprises a mixing door 22 mounted on an actuator 24, and connected to a linking member 26 via linking hinge 28. The linking member in turn is connected to a baffle 30 by baffle hinge 32. The linking member preferably comprises an "H-link" member. Movement of the baffle is guided by the combined effect of guide pin 34 residing in a pair of corresponding linear control slots 36, and guide pin 38 residing in a pair of cammed control slots 40, as will be described subsequently. Although a pair of adjacently arranged linear control slots and cammed control sots are described, it would be possible to provide the same effect with only one linear control slot and / or only one cammed control slot.

The actuator 24 may be a motor mounted directly on the mixing door 22 or a bowden cable connected to the mixing door.

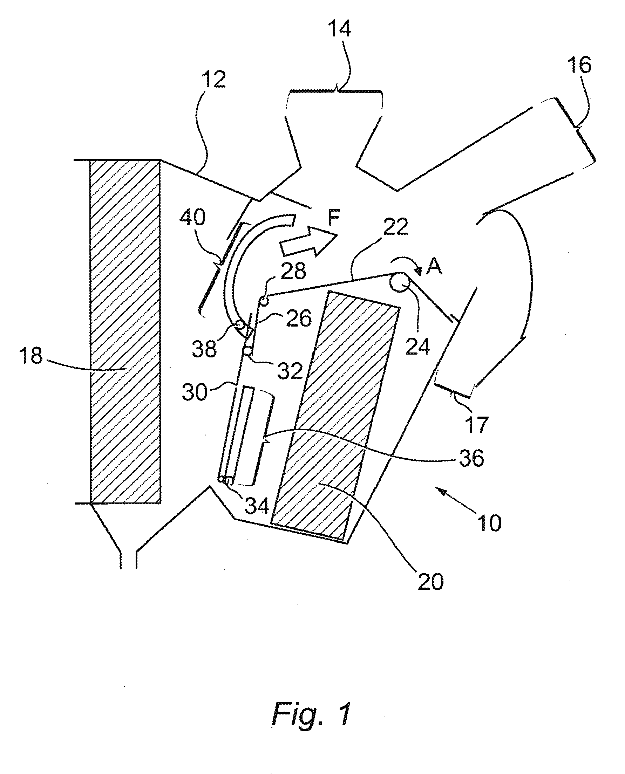

Referring to Fig. 1, in use, when a maximum cooling effect is desired from the HVAC module, the baffle 30 is in the fully closed configuration of Fig. 1. Since mixing door 22 is linked to the baffle 30, it is also in the fully closed position. In this configuration, air passing through the HVAC module will pass evaporator 18 and out through the defrost, ventilation and flooring outlets 14, 16 and 17 in the direction indicated by arrow F in Fig. 1. Substantially no mixing of the air flow F with any air from the heater core 20 occurs.

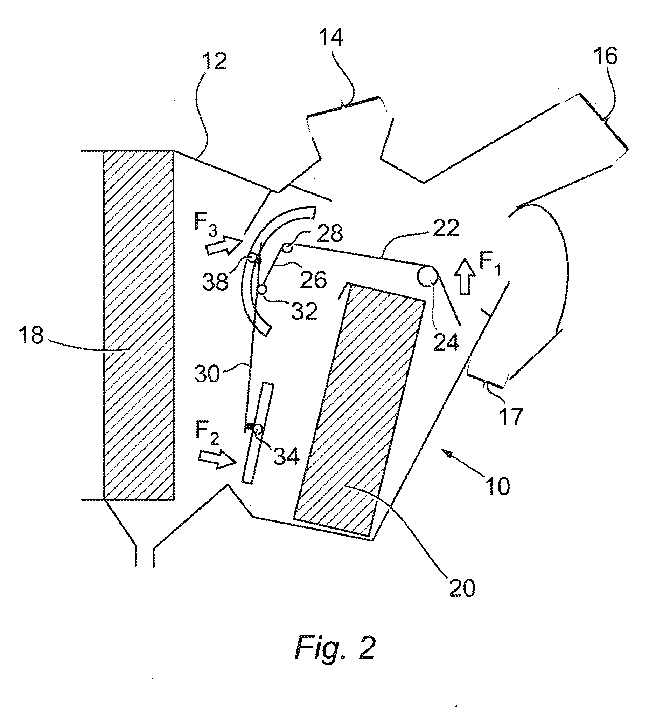

When a reduced cooling effect is desired, the actuator 24 is activated in order to rotate the mixing door 22 in the direction indicated by arrow A in Fig. 1. As seen in Fig. 2, this action causes the mixing door to allow air flow there past as indicated by arrow F1 in Fig. 2. At the same time, the movement of mixing door 22 raises linking member 26 via linking hinge 28. This in turn raises baffle 30 via baffle hinge 32 which opens air flow indicated by arrow F2 to the heater core 20. The bottom of baffle 30 is guided by guide pin 34 in linear control slots 36 whilst being raised. A guide pin and corresponding linear control slot may be provide on both sides of the baffle for this purpose. The top of baffle 30 is guided by guide pin 38 in cammed control slot 40. The guide pin and cammed control slot may be provided on both sides of the baffle or could alternatively be provided on only one side of the baffle. The cammed profile of slot 40 causes the top of baffle 30 to tilt around an axis perpendicular to the relative airflow. This improves the flow of air past the bottom of the baffle toward the heater core 20. In this position a portion of air F3 will also bypass the heater core 20 indicated by arrow F3 in Fig. 2. The heated air flow F1 and the cooled air flow F3 mix prior to exiting outlets 14, 16 and 17.

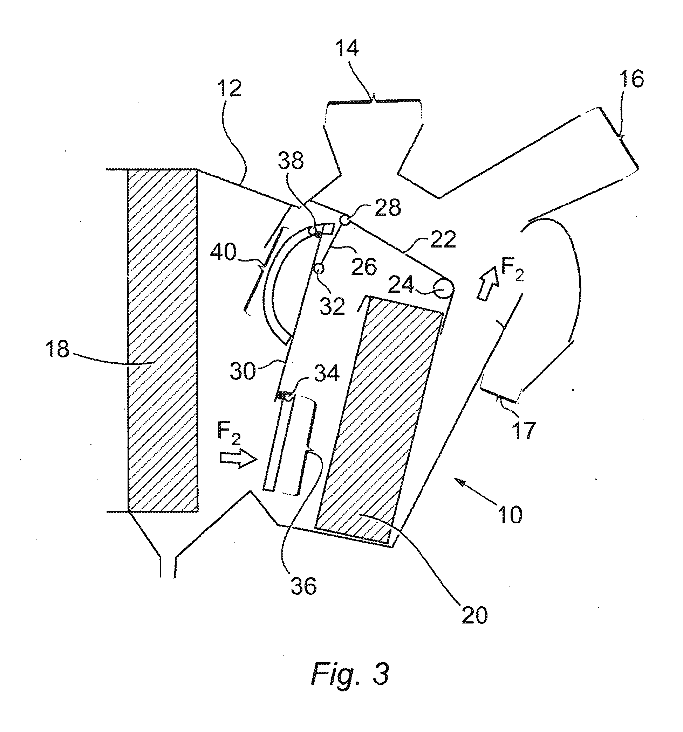

The valve 10 may be left in the position shown in Fig. 2 if only partial mixing of heated and cooled air is required. Alternatively, as shown in Fig. 3, if the HVAC module is to be used in heating mode, the mixing door 22 may simply be rotated until the mixing door is fully open and the top guide pin 38 of the baffle is at the top of the cammed control slot. In this configuration substantially all airflow will flow toward the heater core 20 in the direction indicated by arrow F2 and out toward the outlets 14, 16 and 17 in the direction indicated by arrow F1. No substantial amount of airflow will pass through the valve 10 in the direction previously indicated by arrow F3.

This invention provides a variable flow valve which allows optimised control of the air flowing to the heater core. In addition, the arrangement results in a reduction in noise created by the HVAC module.

Modifications and improvements may be made to the foregoing without departing from the scope of the claims, for example:-

It is possible to provide further control of the airflow past the baffle by providing a cammed control slot on either side of the baffle 30, where one cammed control slot has a different radius of curvature than the other. This will not only tilt the baffle 30 toward the airflow but will also twist it around an axis perpendicular to the tilt axis.

As well as being applicable to automobiles, the present invention may be used in a variety of HVAC applications, such as standalone HVAC modules, HVAC modules mounted in trucks etc.

## Claims

1. A variable flow valve for a Heating Ventilation and Air Conditioning module, the variable flow valve comprising:-
a mixing door (22);
a baffle (30) linked to the mixing door (22) by way of linking means (32) such that movement of the mixing door (22) causes the baffle (30) to move from a closed configuration to an open configuration; and
a control means for controlling the baffle (30) such that movement of the baffle (30) from a closed configuration to the open configuration causes the baffle (30) to tilt relative to flow through the valve, wherein the control means comprises a first cammed control slot (40) for receiving a portion of the baffle and a second cammed control slot (40) corresponding to, and on an opposite side from, the first cammed control slot (30), **characterised in that** the first and second cammed control slots (40) have different radii of curvature from one another in order to cause the baffle (30) to twist around a twist axis substantially perpendicular to flow through the valve.

2. A variable flow valve according to claim 1, wherein the linking means (32) comprises a link member (26) having a first hinge (28) at one end to allow connection to the mixing door (22) and a second hinge (32) at the other end to allow connection to the baffle (30).

3. A variable flow valve according to claim 2, wherein the link member (26) is an H-link.

4. A variable flow valve according to any preceding claim, wherein the mixing door (22) comprises a first section adapted to selectively prevent flow to bypass a heater core (20) and a second section angled relative to the first to selectively prevent flow to bypass an evaporator (18).

5. A variable flow valve according to any preceding claim, wherein an actuator, typically in the form of an electrical motor or a bowden cable, is provided on the mixing door (22).

6. A variable flow valve according to any preceding claim, wherein the variable flow valve is housed within a Heating Ventilation and Air Conditioning module having an evaporator (18), heater core (20), flow inlets and flow outlets (14, 16, 17).

## Patentansprüche

1. Ventil mit variablem Durchfluss für ein Heizung, Lüftung, Klimaanlage(HVAC - Heating Ventilation and Air Conditioning)-Modul, wobei das Ventil mit variablem Durchfluss aufweist:
eine Mischtür (22);
ein Leitblech (30), das über Verbindungsmittel (32) derart mit der Mischtür (22) verbunden ist, dass eine Bewegung der Mischtür (22) das Leitblech (30) veranlasst, sich von einer geschlossenen Konfiguration zu einer offenen Konfiguration zu bewegen; und
ein Steuermittel zum Steuern des Leitblechs (30) derart, dass eine Bewegung des Leitblechs (30) von einer geschlossenen Konfiguration zu der offenen Konfiguration das Leitblech (30) veranlasst, relativ zu einem Fluss durch das Ventil zu kippen, wobei das Steuermittel einen ersten nockenförmigen Steuerschlitz (40) aufweist zum Aufnehmen eines Teils des Leitblechs und einen zweiten nockenförmigen Steuerschlitz (40), der dem ersten nockenförmigen Steuerschlitz (40) entspricht und diesem gegenüberliegt, **dadurch gekennzeichnet, dass** die ersten und zweiten nockenförmigen Steuerschlitze (40) unterschiedliche Krümmungsradien haben, um das Leitblech (30) zu veranlassen, sich um eine Drehungsachse im Wesentlichen senkrecht zu einem Fluss durch das Ventil zu verdrehen.

2. Ventil mit variablem Durchfluss gemäß Anspruch 1, wobei das Verbindungsmittel (32) ein Verbindungselement (26) aufweist, das ein erstes Scharnier (28) an einem Ende hat, um eine Verbindung zu der Mischtür (22) zu ermöglichen, und ein zweites Scharnier (32) an dem anderen Ende hat, um eine Verbindung mit dem Leitblech (30) zu ermöglichen.

3. Ventil mit variablem Durchfluss gemäß Anspruch 2, wobei das Verbindungselement (26) eine H-Verbindung ist.

4. Ventil mit variablem Durchfluss gemäß einem vorhergehenden Anspruch, wobei die Mischtür (22) einen ersten Abschnitt aufweist, der ausgebildet ist, selektiv zu verhindern, dass ein Fluss einen Heizkern (20) umgeht, und einen zweiten Abschnitt, der relativ zu dem ersten im Winkel vorgesehen ist, um selektiv zu verhindern, dass ein Fluss einen Evaporator (18) umgeht.

5. Ventil mit variablem Durchfluss gemäß einem vorhergehenden Anspruch, wobei ein Aktuator, typischerweise in der Form eines elektrischen Motors oder eines Bowdenzugs, an der Mischtür (22) vorgesehen ist.

6. Ventil mit variablem Durchfluss gemäß einem vorhergehenden Anspruch, wobei sich das Ventil mit variablem Durchfluss in einem Heizung, Lüftung, Klimaanlage(HVAC - Heating Ventilation and Air Conditioning)-Modul befindet, das einen Evaporator (18), einen Heizkern (20), Fließeinlässe und Fließauslässe (14, 16, 17) hat.

## Revendications

1. Vanne à débit variable pour un module de chauffage-ventilation-conditionnement-d'air, la vanne à débit variable comprenant :
une porte de mélange (22) ;
une chicane (30) reliée à la porte de mélange (22) par des moyens de liaison (32) de telle façon qu'un mouvement de la porte de mélange (22) amène la chicane (30) à se déplacer depuis une configuration fermée à une configuration ouverte ; et
des moyens de commande pour commander la chicane (30) de telle façon qu'un mouvement de la chicane (30) depuis une configuration fermée à la configuration ouverte amène la chicane (30) à basculer par rapport à l'écoulement traversant la vanne, dans laquelle les moyens de commande comprennent une première fente de commande en came (40) pour recevoir une portion de la chicane et une seconde fente de commande en came (40) qui correspond à la première fente de commande en came (30) et est située sur un côté opposé à celle-ci,
**caractérisé en ce que** la première et la seconde fente de commande en came (40) ont des rayons de courbure différents l'une par rapport à l'autre pour amener la chicane (30) à subir un vrillage autour d'un axe de vrillage sensiblement perpendiculaire à l'écoulement à travers la vanne.

2. Vanne à débit variable selon la revendication 1, dans laquelle les moyens de liaison (32) comprennent un élément de liaison (26) ayant une première articulation (28) à une extrémité pour permettre une connexion à la porte de mélange (22) et une seconde articulation (32) à l'autre extrémité pour permettre une connexion à la chicane (30).

3. Vanne à débit variable selon la revendication 2, dans laquelle l'élément de liaison (26) est un bras en H.

4. Vanne à débit variable selon l'une quelconque des revendications précédentes, dans laquelle la porte de mélange (22) comprend une première section adaptée à empêcher sélectivement l'écoulement pour by-passer une unité de chauffage (20), et une seconde section formant un angle par rapport à la première pour empêcher sélectivement l'écoulement pour by-passer un évaporateur (18).

5. Vanne à débit variable selon l'une quelconque des revendications précédentes, dans laquelle un actionneur, typiquement sous la forme d'un moteur électrique ou d'un câble Bowden, est prévu sur la porte de mélange (22).

6. Vanne à débit variable selon l'une quelconque des revendications précédentes, dans laquelle la vanne à débit variable est logée dans un module de chauffage-ventilation-conditionnement-d'air ayant un évaporateur (18), une unité de chauffage (20), des entrées et des sorties (14, 16, 17) pour l'écoulement.
